# EUROPEAN PATENT APPLICATION

(11) **EP 4 653 116 A1**
(43) Date of publication of application: **26.11.2025**
(21) Application number: 25177664.7
(22) Date of filing: 20.05.2025
(51) Int. Cl.: B23K 9/095, B23K 9/167, B23K 9/29, B23K 9/32, B23K 9/12, B23K 9/133

(54) **FILLER ROD FEEDER PEN TRACKING ATTACHMENTS FOR WELDING TECHNIQUE MONITORING SYSTEMS**

(30) Priority: 20.05.2024 US 202463649629 P; 16.05.2025 US 202519210708
(71) Applicant: Illinois Tool Works Inc., Glenview IL 60025 (US)
(72) Inventor: BECKER, William Joshua, Glenview, 60025 (US); KOPAC III, Jordan J., Glenview, 60025 (US); BEATHAM, Benjamin, Glenview, 60025 (US)
(74) Representative: HGF

(57) **Abstract**

Some examples of the present disclosure relate to feeder pen tracking attachments (200) that allow trackable markers (299) to be easily attached to filler rod feeder pens (100), thereby removing the need for costly customized/modified filler rod feeder pens (and/or filler rods (602)). In some examples, each feeder pen tracking attachment (200) includes one or more trackable markers (299) that can be detected and/or tracked by a monitoring system (650). In some examples, the trackable marker(s) (299) of the feeder pen tracking attachment (200) facilitate tracking and/or monitoring of welding technique by aiding in the tracking/monitoring of the position(s) and/or orientation(s) of the filler rod feeder pen (100) (and/or filler rod (602)) during welding-type operations.

## Description

### CROSS REFERENCE TO RELATED APPLICATIONS

This application claims priority to, and the benefit of, U.S. Provisional Application No. 63/649,629, filed May 20, 2024, entitled "Tracking Attachments for Stick and TIG Portable Welding Technique Monitoring Systems," the entire contents of which are hereby incorporated by reference.

### TECHNICAL FIELD

The present disclosure generally relates to welding technique monitoring systems, and, more particularly, to filler rod feeder pen tracking attachments for welding technique monitoring systems.

### BACKGROUND

Welding technique generally refers to the way in which a welding operator positions, moves, and/or manipulates a welding torch during a welding operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to filler rod feeder pen tracking attachments for welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1a-1d show examples of a filler rod feeder pen, in accordance with aspects of this disclosure.
FIGS. 2a-2b show examples of a feeder pen tracking attachment configured for attachment to the filler rod feeder pen of FIGS. 1a-1d, in accordance with aspects of this disclosure.
FIGS. 3a-3b show examples of a tracking body of the feeder pen tracking attachment of FIGS. 2a-2b, in accordance with aspects of this disclosure.
FIGS. 4a-4c show examples of a tracking wheel assembly of the feeder pen tracking attachment of FIGS. 2a-2b, in accordance with aspects of this disclosure.
FIGS. 5a-5d show examples of the feeder pen tracking attachment of FIGS. 2a-2b being attached to the filler rod feeder pen of FIGS. 1a-1d, in accordance with aspects of this disclosure.
FIG. 6 shows an example of a welding-type system in which a monitoring system may be used to track the filler rod feeder pen of FIGS. 1a-1d (and/or its filler rod) by tracking the feeder pen tracking attachment of FIGS. 2a-2b, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to feeder pen tracking attachments that allow trackable markers to be attached to filler rod feeder pens, thereby removing the need for costly customized/modified filler rod feeder pens (and/or filler rods). In some examples, each tracking attachment includes one or more trackable markers that can be detected and/or tracked by a monitoring system. In some examples, the trackable marker(s) of the tracking attachment facilitate tracking and/or monitoring of the position(s) and/or orientation(s) of the filler rod feeder pen (and/or its filler rod) during welding-type operations (e.g., Gas Tungsten Arc Welding (GTAW) operations).

Some examples of the present disclosure relate to a tracking attachment for a filler rod feeder pen, comprising: a tracking mount configured for connection to the filler rod feeder pen; and a trackable marker that can be detected by a tracking system, the trackable marker being disposed on the tracking mount.

In some examples, the tracking mount comprises a plurality of sidewalls, each sidewall having a unique trackable marker. In some examples, the tracking mount comprises a conduit sized to fit a first end of the filler rod feeder pen. In some examples, the tracking attachment further comprises an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen; and a roller held in alignment with the extended feeder channel by the attachment body such that a filler rod moving through the extended feeder channel and past the roller will contact the roller and cause the roller to turn.

In some examples, the tracking attachment further comprises a roller sensor configured to capture roller motion data related to a roller motion of the roller; and communication circuitry configured to send one or more signals representative of the roller motion data to the tracking system. In some examples, the tracking attachment further comprises a tracking wheel in mechanical communication with the roller such that the tracking wheel turns at a tracking wheel turn rate that is directly proportional to a roller turn rate of the roller. In some examples, the tracking attachment further comprises a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

Some examples of the present disclosure relate to a filler rod feeder pen, comprising: a pen body having a first pen end with a first pen opening and a second pen end with a second pen opening; a feeder channel extending from the first pen opening to the second pen opening; a feeder wheel configured to urge a filler rod through the feeder channel towards or away from the first pen end or the second pen end; and a tracking attachment comprising: a tracking mount attached to, or integrated with, the first pen end, and a trackable marker that can be detected by a tracking system, the trackable marker being disposed on the tracking mount.

In some examples, the tracking mount comprises a plurality of sidewalls, each sidewall having a unique trackable marker. In some examples, the tracking mount comprises a conduit within which the first pen end is positioned. In some examples, the tracking attachment further comprises: an attachment body coupled to the tracking mount, the attachment body comprising an extended feeder channel aligned with the feeder channel, and a roller held in alignment with the extended feeder channel by the attachment body such that a filler rod moving through the extended feeder channel and past the roller will contact the roller and cause the roller to turn.

In some examples, the tracking attachment further comprises: a roller sensor configured to capture roller motion data related to a roller motion of the roller, and communication circuitry configured to send one or more signals representative of the roller motion data to the tracking system. In some examples, the tracking attachment further comprises a tracking wheel in mechanical communication with the roller such that the tracking wheel turns at a tracking wheel turn rate that is directly proportional to a roller turn rate of the roller. In some examples, the tracking attachment further comprises a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

Some examples of the present disclosure relate to a welding system, comprising: a filler rod feeder pen; and a tracking attachment comprising: a tracking mount configured for connection to the filler rod feeder pen, and a trackable marker that can be detected by a tracking system, the trackable marker being disposed on the tracking mount.

In some examples, the tracking mount comprises a plurality of sidewalls, each sidewall having a unique trackable marker, or the tracking mount comprises a conduit sized to fit a first end of the filler rod feeder pen. In some examples, the tracking attachment further comprises: an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen, a roller held in alignment with the extended feeder channel by the attachment body such that a filler rod moving through the extended feeder channel and past the roller will contact the roller and cause the roller to turn, and a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

In some examples, the tracking attachment further comprises: a roller sensor configured to capture roller motion data related to a roller motion of the roller, and communication circuitry configured to send one or more signals representative of the roller motion data to the tracking system. In some examples, the tracking attachment further comprises a tracking wheel in mechanical communication with the roller such that the tracking wheel turns at a tracking wheel turn rate that is directly proportional to a roller turn rate of the roller. In some examples, the welding system further comprises the tracking system, the tracking system comprising: a tracking sensor configured to capture tracking sensor data, processing circuitry configured to: analyze the tracking sensor data to identify a trackable marker position or a trackable marker orientation of the trackable marker, and identify a feeder pen position or a feeder pen orientation of the filler rod feeder pen based on the trackable marker position or the trackable marker orientation of the trackable marker, and determine a welding technique parameter based on the feeder pen position or the feeder pen orientation of the filler rod feeder pen, and a user interface configured output the welding technique parameter.

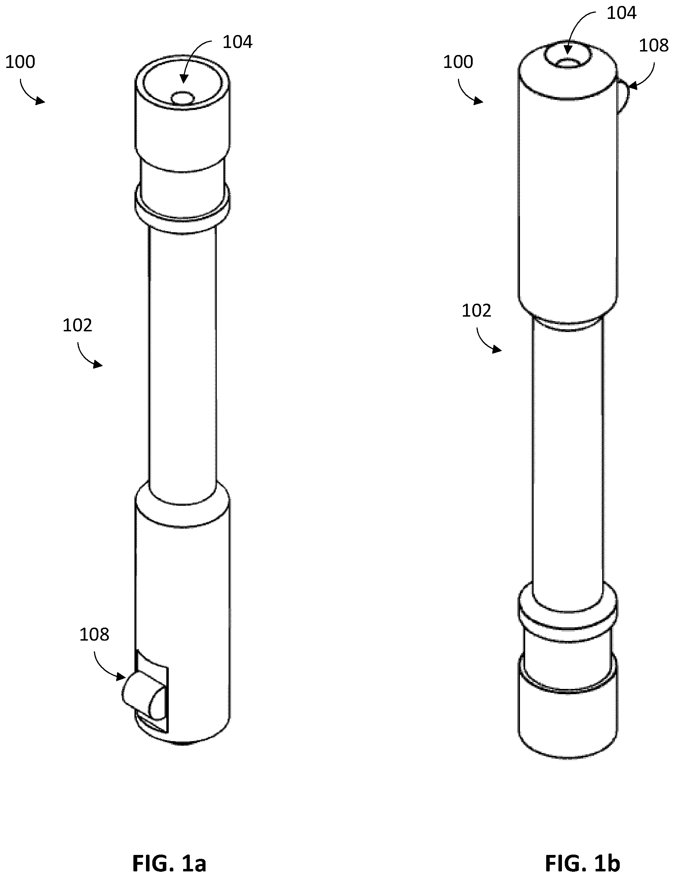

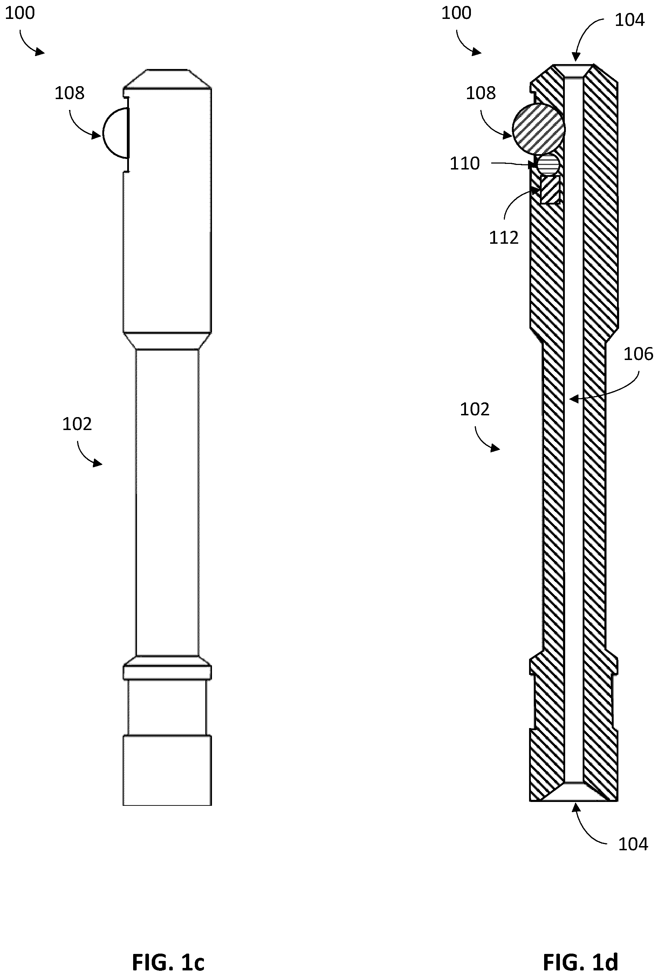

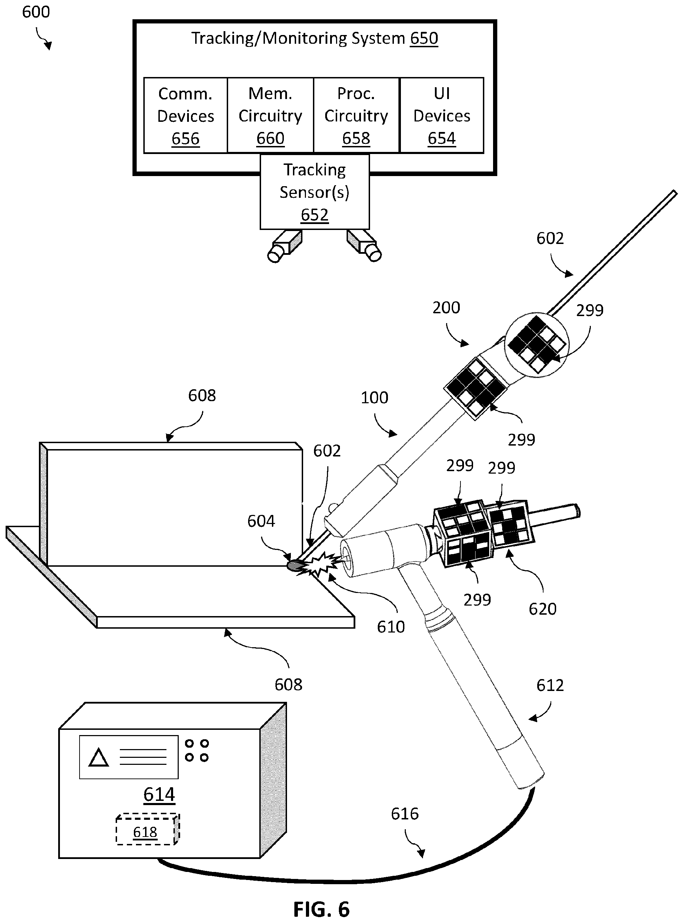

FIGS. 1a-1d show examples of a filler rod feeder pen 100. In some examples, the filler rod feeder pen 100 is used by operators to feed a filler rod 602 forward during a welding-type operation. FIG. 6, for example, shows the filler rod feeder pen 100 being used to feed a filler rod 602 towards and/or into a weld puddle 604 on a workpiece 608 during a welding-type operation.

In some examples, the filler rod 602 is a rod of metallic material (e.g., steel, nickel, aluminum). In some examples, the melted material of the filler rod 602 may be used to "fill" in a weld, welding joint, hole, and/or gap on a workpiece 608 (and/or between two or more workpieces 608) during a welding-type operation.

In some examples, the portion of the filler rod 602 proximate (and/or in) the weld puddle 604 is consumed and/or melted during the welding-type operation. In some examples, this consumption reduces a length of the filler rod 602 (e.g., by the length of the consumed portion). In some examples, the filler rod 602 must be continuously and/or incrementally moved and/or "fed" forward during the welding-type operation so that there is always new/additional filler material available for the welding-type operation.

While the filler rod 602 can be held directly by the operator (e.g., in the operator's hand), and/or be moved and/or "fed" forward manually and/or by hand, operators sometimes use a filler rod feeder pen 100 to assist with holding and/or feeding forward the filler rod 602. In the example of FIGS. 1a-1d, the filler rod feeder pen 100 is comprised of a generally cylindrical feeder pen body 102. The feeder pen body 102 is shown as having openings 104 at either end of the feeder pen body 102.

In the example of FIG. 1d, the feeder pen body 102 is additionally shown as having a feeder channel 106. The feeder channel 106 is shown extending through the feeder pen body 102 between (and/or connecting) the two end openings 104. In some examples, the feeder channel 106 is sized to fit a filler rod 602.

In the examples of FIGS. 1a-1d, the filler rod feeder pen 100 is further shown as including a feeder wheel 108. In some examples, when operated by (e.g., a finger of) an operator, the feeder wheel 108 is configured to urge a filler rod 602 through the feeder channel 106 (e.g., towards and/or away from an opening 104).

In the example of FIG. 1d, the feeder wheel 108 is shown extending within the feeder pen body 102. Within the feeder pen body 102, the feeder wheel 108 is shown positioned (at least slightly) in and/or adjacent to the feeder channel 106. In some examples, when so positioned, the feeder wheel 108 can make contact with a filler rod 602 when the filler rod 602 extends through the feeder channel 106.

In some examples, the feeder wheel 108 is configured to rotate about a feeder wheel axis (e.g., at the urging of a finger of an operator). In some examples, when rotated, the feeder wheel 108 makes contact with a filler rod 602 extending through the feeder channel 106. In some examples, the contact between the feeder wheel 108 and the filler rod 602 while the feeder wheel 108 is rotating serves to urge the filler rod 602 through the feeder channel 106 towards and/or away from an end opening 104 of the feeder pen body 102.

In some examples, the filler rod 602 and/or filler rod feeder pen 100 is used in conjunction with a tungsten inert gas (TIG) welding torch 612 to perform a welding-type operation. FIG. 6, for example, shows a welding-type system 600 in which the TIG welding torch 612 creates a welding arc 610 that extends between the TIG welding torch 612 and the workpiece(s) 608. In some examples, the welding arc 610 created by the TIG welding torch 612 generates enough heat to melt the workpiece(s) 608 and/or create the molten weld puddle 604 into which the filler rod 602 is fed (e.g., by the filler rod feeder pen 100).

In some examples, the TIG welding torch 612 creates the welding arc 610 using (e.g., electrical) welding-type output power supplied by a welding-type power supply 614. In the example of FIG. 6, the TIG torch 612 is shown connected to a welding-type power supply 614 through a torch cable 616. The welding-type power supply 614 is shown as including power conversion circuitry 618 configured to convert input power (e.g., from a generator, battery, mains power, etc.) to welding-type output power. In some examples, the torch cable 404 routes the welding-type output power (and/or shielding gas) from the welding-type power supply 614 to the TIG torch 612.

In some examples, it is desirable to track and/or monitor the technique of an operator when the operator performs a welding-type operation using the TIG torch 612, filler rod 602, and/or filler rod feeder pen 100. In some examples, a tracking and/or monitoring system 650 can be used for this purpose. In FIG. 6, for example, the welding-type system 600 is shown as including a tracking and/or monitoring system 650 that is configured to track and/or monitor the technique of an operator when the operator performs a welding-type operation using the TIG torch 612, filler rod 602, and/or filler rod feeder pen 100.

In the example of FIG. 6, the monitoring system 650 is shown as including tracking sensors 652. In some examples, the tracking sensors 652 comprise one or more acoustic sensors, ultrasonic sensors, infrared (IR) sensors, IR projectors/detectors, near field communication (NFC) sensors, radio frequency identification (RFID) sensors, thermal sensors, optical sensors, and/or camera sensors. In some examples, the monitoring system 650 uses (e.g., tracking) sensor data captured by the tracking sensor(s) 652 to track, monitor, and/or identify the technique (and/or technique parameters) of the operator when the operator performs a welding-type operation using the TIG torch 612, filler rod 602, and/or filler rod feeder pen 100.

In the example of FIG. 6, the monitoring system 650 is also shown as including user interface (UI) devices 654. In some examples, the UI devices 654 include input devices and/or output devices. Examples of input devices include touch screens, keyboards, microphones, buttons, knobs, levers, switches, dials, slides, and/or other input devices. Examples of output devices include display screens, speakers, lights, haptic devices, and/or other output devices. In some examples, operators (and/or others) are informed of tracked, monitored, and/or identified technique parameters via one or more outputs of the UI device(s) 654.

In the example of FIG. 6, the monitoring system 650 is also shown as including monitoring communication devices 656. In some examples, the monitoring communication devices 656 comprise communication circuitry and/or one or more antennas. In some examples, the monitoring communication devices 656 are used to communicate with other devices of the welding-type system 600.

In the example of FIG. 6, the monitoring system 650 is further shown as including processing circuitry 658 and memory circuitry 660. In some examples, the processing circuitry 658 comprises one or more processors. In some examples, the processing circuitry 658 uses sensor data captured by the tracking sensor(s) 652 to track, monitor, and/or identify the technique (and/or technique parameters) of an operator when the operator performs a welding-type operation using the TIG torch 612, filler rod 602, and/or filler rod feeder pen 100.

In some examples, one or more of the technique parameters are stored in memory circuitry 660. In some examples, technique parameters include a travel speed, travel direction, travel angle, work angle, arc length, aim, arc length, feed rate of the filler rod 602, consumption amount of the filler rod 602, and/or consumption rate of the filler rod 602.

In some examples, in order for the monitoring system 650 to monitor technique (and/or technique parameters), the monitoring system 650 must track and/or monitor the position(s) and/or orientation(s) of the filler rod 602 and/or (e.g., a tungsten tip of) the TIG torch 612 (e.g., relative to the workpiece(s) 608). In some examples, the technique parameters are determined based on the position(s) and/or orientation(s) of the filler rod 602 and/or (e.g., the tungsten electrode of) the TIG torch 612 (e.g., relative to the workpiece(s) 608).

In some examples, it is difficult to track and/or monitor the position(s) and/or orientation(s) of the filler rod 602 directly. In some examples, one way to (e.g., indirectly) track and/or monitor the position(s) and/or orientation(s) of the filler rod 602 is to track and/or monitor the position and/or orientation of the filler rod feeder pen 100. However, while, in some examples, the monitoring system 650 can use sensor data captured by one or more tracking sensors 652 to try and track the position(s) and/or orientation(s) of the filler rod feeder pen 100 (and/or TIG torch 612), such tracking can be a difficult task unaided.

In some examples, trackable markers 299 (e.g., fiducial markers) can be used to aid in tracking position and/or orientation. For example, the trackable markers 299 may be easily recognized, identified, monitored, and/or tracked by the (e.g., processing circuitry 658 of the) monitoring system 650 in and/or using (e.g., image) sensor data captured by the tracking sensor(s) 652. Once identified, the position(s) and/or orientation(s) of the trackable markers 299 can be determined from the sensor data. If the trackable marker(s) 299 can be attached to (and/or otherwise made to move with) the filler rod 602, filler rod feeder pen 100, and/or TIG torch 612, the position(s) and/or orientation(s) of the filler rod 602, filler rod feeder pen 100, and/or TIG torch 612 may be determined based on the determined position(s) and/or orientation(s) of the trackable markers 299 (and/or one or more known/measured/calibrated offsets).

However, in some examples, the trackable markers 299 require approximately flat surfaces to be effectively displayed, recognized, identified, monitored, and/or tracked. Meanwhile, the outer surfaces of the filler rod 602, filler rod feeder pen 100, and TIG torch 612 are all shown (e.g., in FIG. 6) as being comprised of mostly curved and/or cylindrical surfaces. Additionally, the filler rod 602 is continuously consumed during a welding-type operation. This can make it difficult to directly attach the trackable markers 299 to (and/or otherwise use the trackable markers 299 to directly track) the filler rod 602, filler rod feeder pen 100, and TIG torch 612 (barring some potentially expensive and/or rare customization(s) and/or modification(s)).

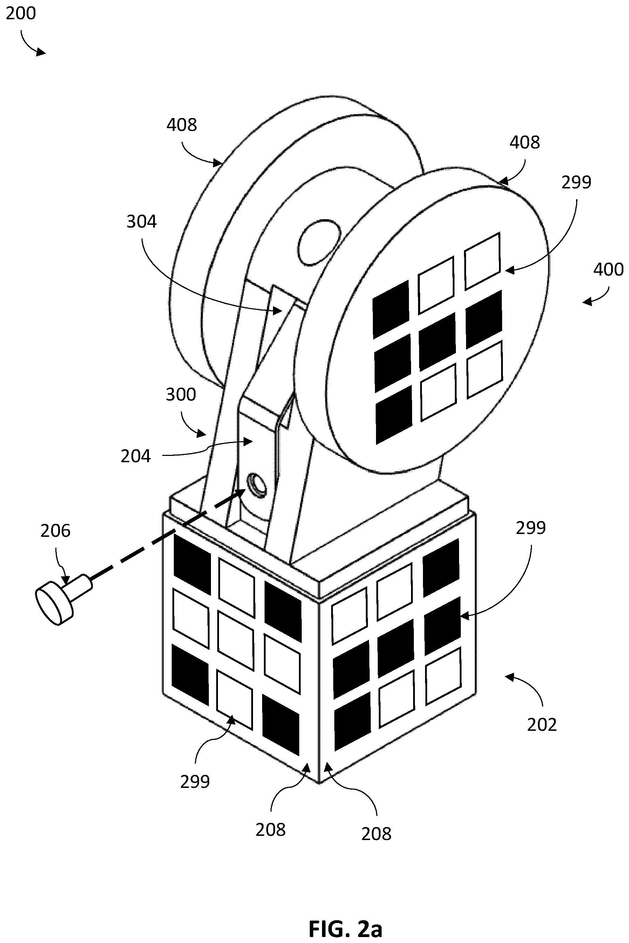

FIG. 6 shows an example of a TIG torch tracking attachment 620 that allows for trackable markers 299 to be easily attached to many (e.g., conventional and/or standard) TIG torches 612. The TIG torch tracking attachment 620 is described in more detail in U.S. Patent Application No. 19/210,324, filed May 16, 2025, entitled "TIG TORCH TRACKING ATTACHMENTS FOR WELDING TECHNIQUE MONITORING SYSTEMS," the entire contents of which is hereby incorporated by reference. FIGS. 2a-2b show examples of a feeder pen tracking attachment 200 that allows for trackable markers 299 to be easily attached to many (e.g., conventional and/or standard) filler rod feeder pens 100.

In the examples of FIGS. 2a-2b, the feeder pen tracking attachment 200 includes a tracking mount 202, a tracking body 300, a tension spring 204 connected to the tracking body 300 (e.g., via a fastener 206), and a tracking wheel assembly 400 supported by the tracking body 300. The tracking body 300 is shown as being connected at/to an end wall of the tracking mount 202.

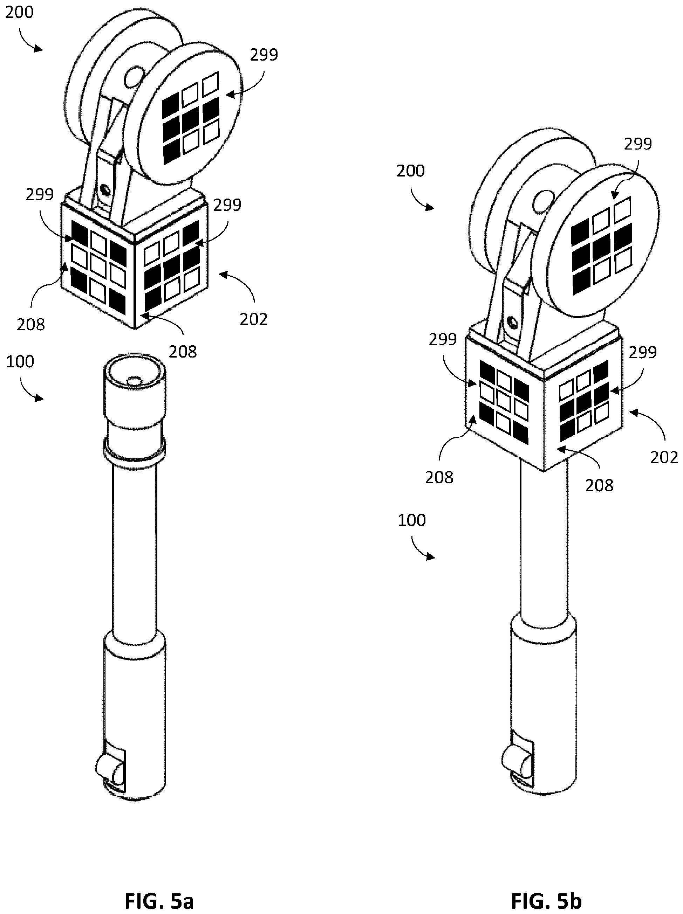

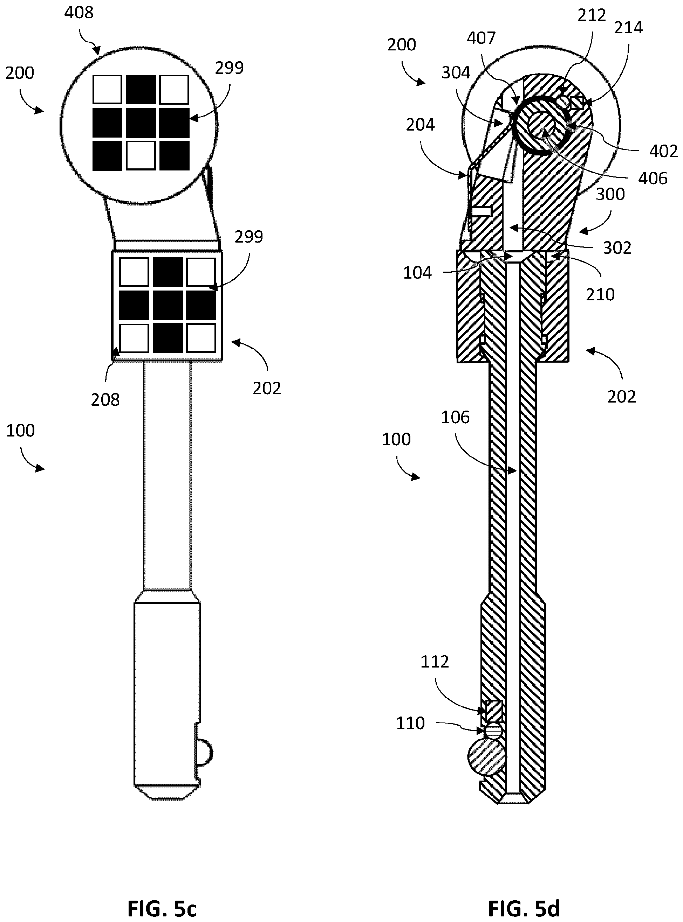

In the examples of FIGS. 5a-5d, the tracking mount 202 connects the feeder pen tracking attachment 200 to the filler rod feeder pen 100. In some examples, the tracking mount 202 is integrated with an end of the filler rod feeder pen 100.

In the examples of FIGS. 2a-2b and 5a-5c, the tracking mount 202 is shown as being a cube with two end walls and four sidewalls 208, with each sidewall 208 having a trackable marker 299. As shown, the tracking mount 202 includes a different and/or unique trackable marker 299 on each sidewall 208 (e.g., to help the monitoring system 650 determine orientation relative to a longitudinal axis of the feeder pen 100 and/or tracking attachment 200).

In some examples, one or more of the trackable markers 299 are positioned on and/or attached to one or more of the sidewalls 208 via an adhesive, fastener, and/or other mechanism. In some examples, one or more of the trackable markers 299 are etched and/or painted onto one or more of the sidewalls 208 (e.g., via laser, sharp object, pencil, pen, paintbrush, etc.). While shown as pattern markers in the examples of FIGS. 2a-2b and 5a-5c, in some examples, one or more of the trackable markers 299 may additionally, or alternatively, comprise reflective markers and/or light emitting markers (e.g., light emitting diodes (LEDs)).

In some examples, the flat rectangular surfaces of the sidewalls 208 work well with trackable markers 299. In some examples, the shape and/or configuration of the tracking mount 202 and/or the sidewalls 208 results in the trackable markers 299 being viewable, detectable, and/or identifiable from several different directions and/or orientations. In some examples, the shape and/or configuration of the tracking mount 202 and/or the sidewalls 208 increases the chance that at least one trackable marker 299 (and/or sidewall 208) will be clearly visible to a tracking sensor 652 (and/or identifiable in captured sensor data) regardless of the orientation of the filler rod feeder pen 100 and/or the feeder pen tracking attachment 200.

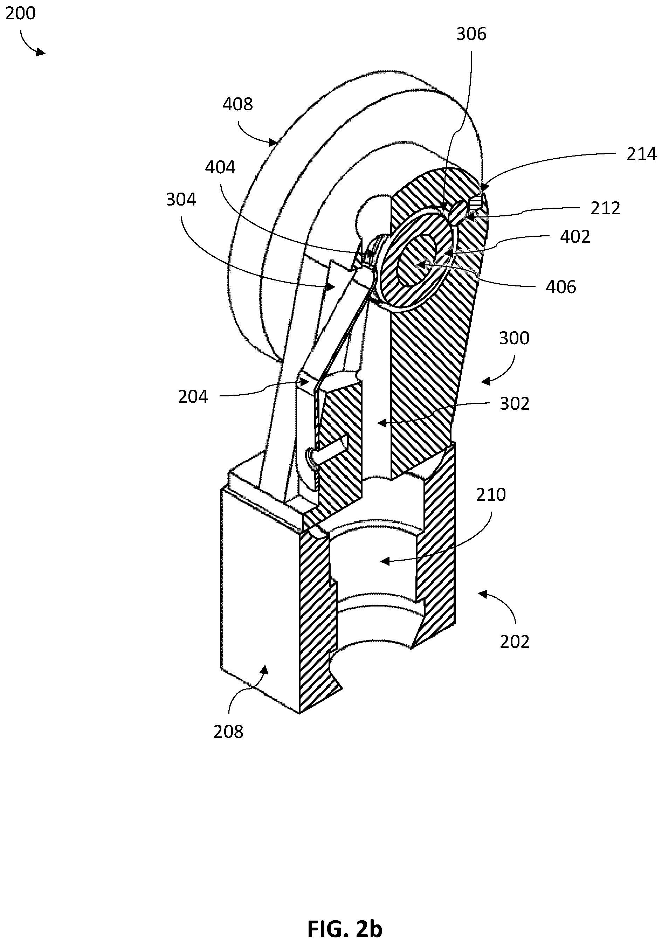

In the example of FIG. 2b, the tracking mount 202 of the feeder pen tracking attachment 200 is shown with a conduit 210 extending through an approximate center, central axis, and/or middle of the tracking mount 202. The conduit 210 is shaped, positioned, and/or configured to receive, accommodate, house, encase, and/or encapsulate one end of the filler rod feeder pen 100. In some examples, the interior (and/or all) of the tracking mount 202 is composed of a flexible and/or deformable material (e.g., rubber) that allows for the end of the filler rod feeder pen 100 to be pushed into (and/or housed/secured within) the conduit 210 of the tracking mount 202.

FIGS. 5b-5d show one end of the filler rod feeder pen 100 housed and/or secured within the conduit 210 of the tracking mount 202 of the feeder pen tracking attachment 200. The tracking body 300 is shown abutting the end of the filler rod feeder pen 100 when the filler rod feeder pen 100 is housed and/or secured in the conduit 210. As shown, the conduit 210 terminates at the tracking body 300. In some examples, the tracking body 300 prevents the filler rod feeder pen 100 from moving any further through the conduit 210 when the filler rod feeder pen 100 is housed and/or secured in the conduit 210.

In the examples of FIGS. 2b and 5d, the tracking body 300 is shown as including an extended feeder channel 302. The extended feeder channel 302 is shown as being aligned with the conduit 210 of the tracking body 300. In the example of FIG. 5d, the extended feeder channel 302 is also shown as being aligned with the opening 104 and/or feeder channel 106 of the filler rod feeder pen 100 when the filler rod feeder pen 100 is housed and/or secured in the conduit 210 of the tracking mount 202. In some examples, the alignment of the feeder channel 106 and extended feeder channel 302 enables a filler rod 602 that is being pushed through the feeder channel 106 to move into and/or through the extended feeder channel 302 (e.g., after exiting the feeder channel 106 via the opening 104).

In the examples of FIGS. 2b and 5d, a roller 402 of the wheel assembly 400 of the feeder pen tracking attachment 200 is shown extending partially into and/or adjacent to the extended feeder channel 302. In some examples, the roller 402 is composed of a flexible material (e.g., nylon, rubber, etc.). In some examples, the roller 402 comprises an O-ring. As shown, a portion of the internal walls defining the extended feeder channel 302 are cut out proximate the roller 402, allowing the roller 402 to extend into and/or adjacent to the extended feeder channel 302.

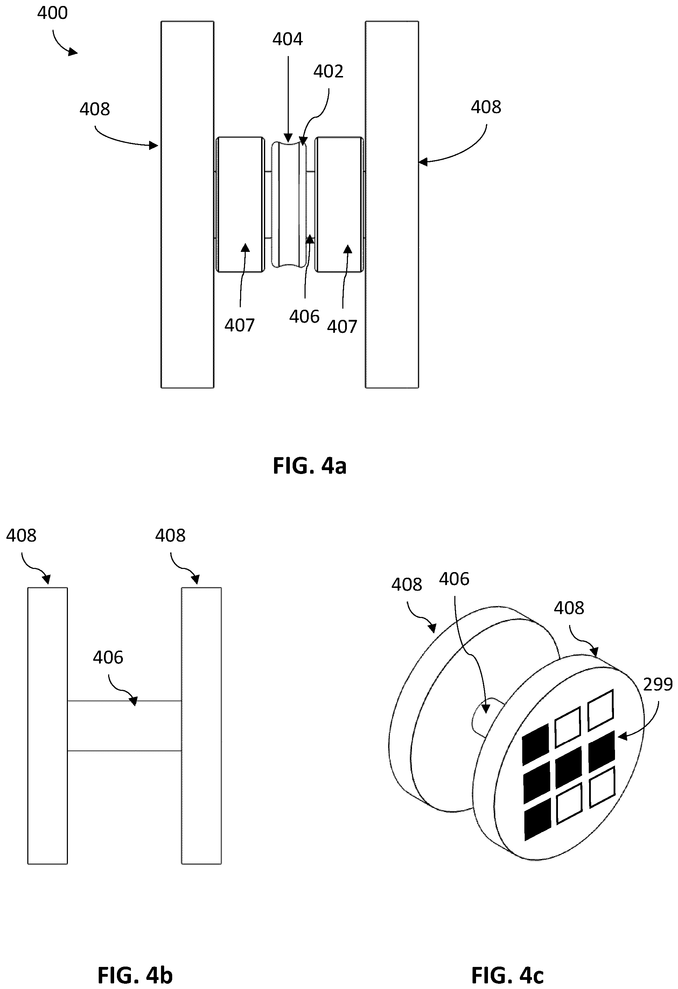

In the examples of FIGS. 2b and 4a, the roller 402 is shown as having a U shaped groove 404 (though, in some examples, the groove 404 may instead be V shaped, or some other shape). The groove 404 of the roller 402 is shown as being held alignment with the extended feeder channel 302 by the tracking body 300. In some examples, the groove 404 of the roller 402 is shaped, positioned, and/or configured to accommodate and/or fit a filler rod 602. In some examples, when a filler rod 602 moves through the extended feeder channel 302, the filler rod 602 moves through and/or adjacent the groove 404 of the roller 402, thereby making contact with the roller 402, and/or causing the roller 402 to turn on an axle 406.

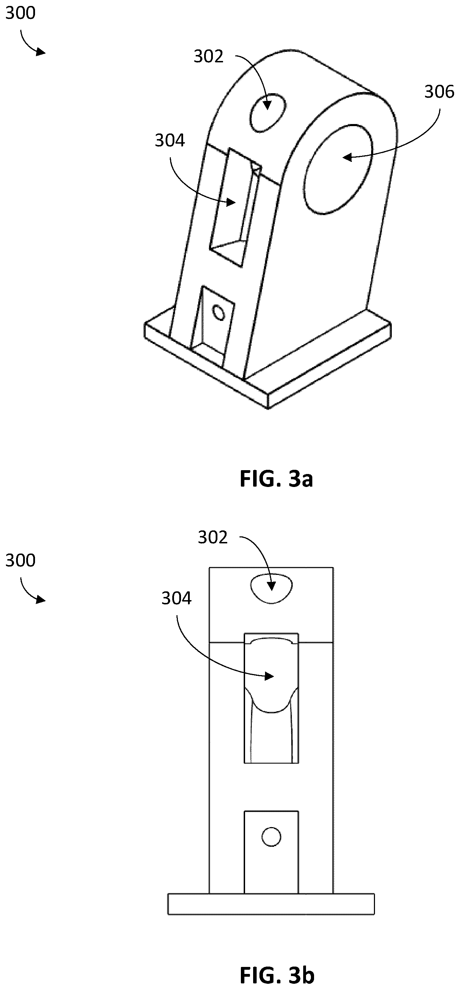

In the examples of FIGS. 2a-2b and 5a-5d, the feeder pen tracking attachment 200 is further shown as including a tension spring 204. One end of the tension spring 204 is shown attached to the tracking body 300 (e.g., via a fastener 206), while the other end is shown extending through a window 304 of the tracking body 300 (see also FIGS. 2a-3b). In FIGS. 2b and 5d, the window 304 is shown intersecting with and/or extending into the extended feeder channel 302. The tension spring 204 is shown extending through the window 304 and into the extended feeder channel302, adjacent to the roller 402. In some examples (e.g., where smaller and/or slimmer filler rods 602 are used), the tension spring 204 pushes the filler rod 602 towards the roller 402, thereby ensuring contact is made between the filler rod 602 and the roller 402 when the filler rod 602 moves through the extended feeder channel 302.

In the examples of FIGS. 2b-3a, the tracking body 300 is shown as including a barrel 306. In FIG. 2b, an axle 406 of the tracking wheel assembly 400 is shown extending through the barrel. Like the window 304, the barrel 306 of the tracking body 300 partially intersects (and/or shares some space) with the extended feeder channel 302. The shared space between the barrel 306 and extended feeder channel 302 allows the roller 402 to partially extend into the extended feeder channel 302 from its position on the axle 406 in the barrel 306.

In the examples of FIGS. 4a-4c, the tracking wheel assembly 400 is shown as being comprised of the axle 406, two tracking wheels 408 connected by the axle 406, two circular bearings 407 positioned the axle 406 between the two tracking wheels 408, and the roller 402 positioned on the axle 406 between the two bearings 407. In the example of FIG. 5d, the bearings 407 are shown positioned between the outer walls of the barrel 306 and the axle 406. When so positioned, the bearings 407 hold the axle 406 in place at an approximate center of the barrel 306, and prevent, minimize, and/or limit translational movement of the axle 406.

In some examples, each circular bearing 407 comprises an inner race, an outer race that is movable relative to the inner race, and a plurality of ball bearings positioned between the inner race and outer race that allow the outer race to move relative to the inner race. In some examples, the bearings 407 allow for rotational movement of the axle 406 within the barrel 306.

In the examples of FIGS. 4a-4c, the axle 406 is connected to and/or between two tracking wheels 408. In some examples, when the filler rod 602 moves through the extended feeder channel 302 and makes contact with the roller 402 (thereby causing the roller 402 to rotate), the roller causes the axle 406 to rotate within the barrel 306. In some examples, when the axle 406 is rotated, the tracking wheels 408 connected at the end of the axle 406 are rotated in kind (and/or to a similar degree directly proportional to that of the roller 402 and/or axle 406).

In the examples of FIGS. 2a and 5a-5c, each tracking wheel 408 includes a trackable marker 299. In some examples, the trackable markers 299 are positioned on and/or attached to the tracking wheels 408 via an adhesive, fastener, and/or other mechanism. In some examples, the trackable markers 299 are etched and/or painted onto the tracking wheels 408 (e.g., via laser, sharp object, pencil, pen, paintbrush, etc.). As shown, each tracking wheel 408 includes a different trackable marker 299 (e.g., so the monitoring system 650 can distinguish between different tracking wheels 408 and/or different sides of the feeder pen tracking attachment 200). While each tracking wheel 408 is shown as being approximately circular, in some examples, one or more of the tracking wheels 408 may be differently shaped (e.g., rectangular, cube, cuboid, triangular, pyramid, etc.).

In some examples, the monitoring system 650 tracks and/or monitors the movement and/or turning of the trackable marker(s) 299 on the tracking wheel(s) 408 of the feeder pen tracking attachment 200. In some examples, changes in orientation of a trackable marker 299 on the tracking wheel 408 (e.g., without a corresponding change in orientation of a trackable marker 299 on a sidewall 208) may indicate the trackable marker 299 and/or tracking wheel 408 is turning. In some examples, the monitoring system 650 determines one or more technique parameters (e.g., feed rate, feed amount, consumption rate, etc.) based on the rotatable motion (e.g., turn rate) of the trackable marker 299 and/or tracking wheel 408.

In some examples, the monitoring system 650 determines the one or more technique parameters (e.g., feed rate, feed amount, consumption rate, etc.) using other means. FIG. 5d, for example, shows a roller sensor 212 (e.g., encoder) of the tracking body 300 in contact and/or connected with the roller 402 of the tracking wheel assembly 400.

In some examples, the roller sensor 212 captures roller sensor data related to and/or representative of the (e.g., rotational) motion of the roller 402 (and/or tracking wheel(s) 408). In the example of FIG. 5d, the roller sensor 212 is further shown connected with a roller sensor communication device 214 (e.g., comprising communication circuitry and/or one or more antennas). In some examples, the roller sensor communication device 214 transmits to the monitoring system 650 one or more (e.g., radio, electromagnetic, etc.) signals representative of the roller sensor data captured by the roller sensor 212. In some examples, the monitoring system 650 determines the one or more technique parameters (e.g., feed rate, feed amount, consumption rate, etc.) using and/or based on the roller sensor data captured by the roller sensor 212 and/or transmitted by the roller sensor communication device 214.

In some examples, the monitoring system 650 determines the one or more technique parameters (e.g., feed rate, feed amount, etc.) using and/or based on the sensor data captured by a wheel sensor 110 and/or transmitted by a wheel sensor communication device 112. FIGS. 1d and 5d, for example, show the filler rod feeder pen 100 as including a wheel sensor 110 (e.g., encoder) in contact and/or connected with the feeder wheel 108 and a wheel sensor communication device 112 (e.g., comprising communication circuitry and/or one or more antennas). In some examples, the wheel sensor 110 captures wheel sensor data related to and/or representative of the (e.g., rotational) motion of the feeder wheel 108. In some examples, the wheel sensor communication device 112 sends one or more (e.g., radio, electromagnetic, etc.) signals to the monitoring device representative of the wheel sensor data captured by the wheel sensor 110.

In some examples, the wheel sensor communication device 112, roller sensor communication device 214, and/or monitoring communication device(s) 656 comprise one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, and/or other cable ports. In some examples, the wheel sensor communication device 112, roller sensor communication device 214, and/or monitoring communication device(s) 656 is/are configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.).

In some examples, the tracking wheel(s) 408 may be omitted when the roller sensor 212 and/or wheel sensor 110 is used. In some examples, the technique parameter(s) determined from sensor data detected by the roller sensor 212 and/or wheel sensor 110 may be more accurate and/or precise than technique parameter(s) determined from tracking sensor data captured by tracking sensor(s) 652 (e.g., representative of the rotatable motion of the trackable marker(s) 299 of the tracking wheel(s) 408).

That said, in some examples, the addition of the roller sensor 212 and/or roller sensor communication device 214 to the feeder pen tracking attachment 200 increases the cost and/or complexity of the feeder pen tracking attachment 200. Likewise, in some examples, the addition of the wheel sensor 110 and/or wheel sensor communication device 112 to the filler rod feeder pen 100 increases the cost and/or complexity of the filler rod feeder pen 100, while also requiring modification of conventional and/or widely used filler rod feeder pens 100, the need for which, in some examples, the feeder pen tracking attachment 200 aims to prevent.

The disclosed example feeder pen tracking attachment 200 allows for trackable markers 299 to be easily attached to many and/or most (e.g., conventional) filler rod feeder pens 100, thereby removing the need for costly customized/modified filler rod feeder pens 100. In some examples, the tracking attachment 200 includes one or more trackable markers 299 that can be relatively easily detected and/or tracked by a monitoring system 650. In some examples, the trackable marker(s) 299 of the tracking attachment 200 facilitate tracking and/or monitoring of operator technique by the monitoring system 650, by aiding in the tracking and/or monitoring of the position(s)/orientation(s) of the filler rod feeder pen 100 (and/or filler rod 602) by the monitoring system 650.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the term "approximately," when used to modify or describe a value (or range of values), position, orientation, and/or action, mean reasonably close to that value, range of values, position, orientation, and/or action. Thus, the examples described herein are not limited to only the recited values, ranges of values, positions, orientations, and/or actions but rather should include reasonably workable deviations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used, herein, the term "memory," "memory circuitry," and/or "memory device" means computer hardware or circuitry to store information for use by a processor and/or other digital device. The memory, memory circuitry, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory circuitry, and/or memory device can be configured to store code, instructions, applications, software, firmware and/or data, and may be external, internal, or both with respect to the processor.

As used herein, the term "processor" and/or "processing circuitry" means processing devices, apparatus, programs, circuits, components, systems, and subsystems, whether implemented in hardware, tangibly embodied software, or both, and whether or not it is programmable. The term "processor" and/or "processing circuitry" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor and/or processing circuitry may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

The term "power" is used throughout this specification for convenience, but also includes related measures such as energy, current, voltage, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.
Certain embodiments of the invention are described in the following clauses:
Clause 1. A tracking attachment for a filler rod feeder pen, comprising:
   a tracking mount configured for connection to the filler rod feeder pen; and
   a trackable marker that can be detected by a tracking system, the trackable marker being disposed on the tracking mount.
Clause 2. The tracking attachment of clause 1, wherein the tracking mount comprises a plurality of sidewalls, each sidewall having a unique trackable marker.
Clause 3. The tracking attachment of clause 1, wherein the tracking mount comprises a conduit sized to fit a first end of the filler rod feeder pen.
Clause 4. The tracking attachment of clause 1, further comprising:
   an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen; and
   a roller held in alignment with the extended feeder channel by the attachment body such that a filler rod moving through the extended feeder channel and past the roller will contact the roller and cause the roller to turn.
Clause 5. The tracking attachment of clause 4, further comprising:
   a roller sensor configured to capture roller motion data related to a roller motion of the roller; and
   communication circuitry configured to send one or more signals representative of the roller motion data to the tracking system.
Clause 6. The tracking attachment of clause 4, further comprising a tracking wheel in mechanical communication with the roller such that the tracking wheel turns at a tracking wheel turn rate that is directly proportional to a roller turn rate of the roller.
Clause 7. The tracking attachment of clause 4, further comprising a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.
Clause 8. A filler rod feeder pen, comprising:
   a pen body having a first pen end with a first pen opening and a second pen end with a second pen opening;
   a feeder channel extending from the first pen opening to the second pen opening;
   a feeder wheel configured to urge a filler rod through the feeder channel towards or away from the first pen end or the second pen end; and
   a tracking attachment comprising:
      a tracking mount attached to, or integrated with, the first pen end, and
      a trackable marker that can be detected by a tracking system, the trackable marker being disposed on the tracking mount.
Clause 9. The filler rod feeder pen of clause 8, wherein the tracking mount comprises a plurality of sidewalls, each sidewall having a unique trackable marker.
Clause 10. The filler rod feeder pen of clause 8, wherein the tracking mount comprises a conduit within which the first pen end is positioned.
Clause 11. The filler rod feeder pen of clause 8, wherein the tracking attachment further comprises:
   an attachment body coupled to the tracking mount, the attachment body comprising an extended feeder channel aligned with the feeder channel, and
   a roller held in alignment with the extended feeder channel by the attachment body such that a filler rod moving through the extended feeder channel and past the roller will contact the roller and cause the roller to turn.
Clause 12. The filler rod feeder pen of clause 11, wherein the tracking attachment further comprises:
   a roller sensor configured to capture roller motion data related to a roller motion of the roller, and
   communication circuitry configured to send one or more signals representative of the roller motion data to the tracking system.
Clause 13. The filler rod feeder pen of clause 11, wherein the tracking attachment further comprises a tracking wheel in mechanical communication with the roller such that the tracking wheel turns at a tracking wheel turn rate that is directly proportional to a roller turn rate of the roller.
Clause 14. The filler rod feeder pen of clause 11, wherein the tracking attachment further comprises a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.
Clause 15. A welding system, comprising:
   a filler rod feeder pen; and
   a tracking attachment comprising:
      a tracking mount configured for connection to the filler rod feeder pen, and
      a trackable marker that can be detected by a tracking system, the trackable marker being disposed on the tracking mount.
Clause 16. The welding system of clause 15, wherein the tracking mount comprises a plurality of sidewalls, each sidewall having a unique trackable marker, or the tracking mount comprises a conduit sized to fit a first end of the filler rod feeder pen.
Clause 17. The welding system of clause 15, wherein the tracking attachment further comprises:
   an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen,
   a roller held in alignment with the extended feeder channel by the attachment body such that a filler rod moving through the extended feeder channel and past the roller will contact the roller and cause the roller to turn, and
   a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.
Clause 18. The welding system of clause 15, wherein the tracking attachment further comprises:
   a roller sensor configured to capture roller motion data related to a roller motion of the roller, and
   communication circuitry configured to send one or more signals representative of the roller motion data to the tracking system.
Clause 19. The welding system of clause 18, wherein the tracking attachment further comprises a tracking wheel in mechanical communication with the roller such that the tracking wheel turns at a tracking wheel turn rate that is directly proportional to a roller turn rate of the roller.
Clause 20. The welding system of clause 15, further comprising the tracking system, the tracking system comprising:
   a tracking sensor configured to capture tracking sensor data,
   processing circuitry configured to:
      analyze the tracking sensor data to identify a trackable marker position or a trackable marker orientation of the trackable marker, and
      identify a feeder pen position or a feeder pen orientation of the filler rod feeder pen based on the trackable marker position or the trackable marker orientation of the trackable marker, and
      determine a welding technique parameter based on the feeder pen position or the feeder pen orientation of the filler rod feeder pen, and
   a user interface configured output the welding technique parameter.

## Claims

1. A tracking attachment for a filler rod feeder pen, comprising:
a tracking mount configured for connection to the filler rod feeder pen; and
a trackable marker that can be detected by a tracking system, the trackable marker being disposed on the tracking mount.

2. The tracking attachment of claim 1, wherein the tracking mount comprises a plurality of sidewalls, each sidewall having a unique trackable marker, and/or
wherein the tracking mount comprises a conduit sized to fit a first end of the filler rod feeder pen.

3. The tracking attachment of claim 1 or claim 2, further comprising:
an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen; and
a roller held in alignment with the extended feeder channel by the attachment body such that a filler rod moving through the extended feeder channel and past the roller will contact the roller and cause the roller to turn.

4. The tracking attachment of claim 3, further comprising:
a roller sensor configured to capture roller motion data related to a roller motion of the roller; and
communication circuitry configured to send one or more signals representative of the roller motion data to the tracking system, and/or
wherein the tracking attachment further comprises a tracking wheel in mechanical communication with the roller such that the tracking wheel turns at a tracking wheel turn rate that is directly proportional to a roller turn rate of the roller.

5. The tracking attachment of claim 3 or claim 4, further comprising a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

6. A filler rod feeder pen, comprising:
a pen body having a first pen end with a first pen opening and a second pen end with a second pen opening;
a feeder channel extending from the first pen opening to the second pen opening;
a feeder wheel configured to urge a filler rod through the feeder channel towards or away from the first pen end or the second pen end; and
a tracking attachment comprising:
a tracking mount attached to, or integrated with, the first pen end, and
a trackable marker that can be detected by a tracking system, the trackable marker being disposed on the tracking mount.

7. The filler rod feeder pen of claim 6, wherein the tracking mount comprises a plurality of sidewalls, each sidewall having a unique trackable marker, and/or
wherein the tracking mount comprises a conduit within which the first pen end is positioned.

8. The filler rod feeder pen of claim 6 or claim 7, wherein the tracking attachment further comprises:
an attachment body coupled to the tracking mount, the attachment body comprising an extended feeder channel aligned with the feeder channel, and
a roller held in alignment with the extended feeder channel by the attachment body such that a filler rod moving through the extended feeder channel and past the roller will contact the roller and cause the roller to turn.

9. The filler rod feeder pen of claim 8, wherein the tracking attachment further comprises:
a roller sensor configured to capture roller motion data related to a roller motion of the roller, and
communication circuitry configured to send one or more signals representative of the roller motion data to the tracking system, and/or
wherein the tracking attachment further comprises a tracking wheel in mechanical communication with the roller such that the tracking wheel turns at a tracking wheel turn rate that is directly proportional to a roller turn rate of the roller.

10. The filler rod feeder pen of claim 8 or claim 9, wherein the tracking attachment further comprises a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

11. A welding system, comprising:
a filler rod feeder pen; and
a tracking attachment comprising:
a tracking mount configured for connection to the filler rod feeder pen, and
a trackable marker that can be detected by a tracking system, the trackable marker being disposed on the tracking mount.

12. The welding system of claim 11, wherein the tracking mount comprises a plurality of sidewalls, each sidewall having a unique trackable marker, and/or the tracking mount comprises a conduit sized to fit a first end of the filler rod feeder pen.

13. The welding system of claim 11 or claim 12, wherein the tracking attachment further comprises:
an attachment body coupled to the tracking mount, the attachment body comprising an extended feeder channel positioned such that the extended feeder channel will be held in alignment with a feeder channel of the filler rod feeder pen when the tracking mount is connected to the filler rod feeder pen,
a roller held in alignment with the extended feeder channel by the attachment body such that a filler rod moving through the extended feeder channel and past the roller will contact the roller and cause the roller to turn, and
a tension spring having a first spring end attached to the attachment body and a second spring end that extends proximate the extended feeder channel and the roller such that filler rods of different sizes will all be pressed into contact with the roller by the tension spring when the filler rod moves through the extended feeder channel.

14. The welding system of claim 13, wherein the tracking attachment further comprises:
a roller sensor configured to capture roller motion data related to a roller motion of the roller, and
communication circuitry configured to send one or more signals representative of the roller motion data to the tracking system, and/or
wherein the tracking attachment further comprises a tracking wheel in mechanical communication with the roller such that the tracking wheel turns at a tracking wheel turn rate that is directly proportional to a roller turn rate of the roller.

15. The welding system of any one of claims 11 to 14, further comprising the tracking system, the tracking system comprising:
a tracking sensor configured to capture tracking sensor data,
processing circuitry configured to:
analyze the tracking sensor data to identify a trackable marker position or a trackable marker orientation of the trackable marker, and
identify a feeder pen position or a feeder pen orientation of the filler rod feeder pen based on the trackable marker position or the trackable marker orientation of the trackable marker, and
determine a welding technique parameter based on the feeder pen position or the feeder pen orientation of the filler rod feeder pen, and
a user interface configured output the welding technique parameter.
